# FASCICULE DE BREVET EUROPEEN

(11) **EP 0 743 576 B1**
(45) Date de publication et mention de la délivrance du brevet: **25.08.1999**
(21) Numéro de dépôt: 96107331.9
(22) Date de dépôt: 09.05.1996
(51) Int. Cl.: G04B 47/06, G01C 17/10

(54) **Dispositif servant à indiquer la direction d'un lieu géographique déterminé**
Eine die Richtung eines vorherbestimmten geographischen Orts anzeigende Vorrichtung
Device indicating the direction of a given geographical location

(30) Priorité: 17.05.1995 CH 145495
(43) Date de publication de la demande: 20.11.1996
(73) Titulaire: ASULAB S.A., CH-2501 Bienne (CH)
(72) Inventeur: Bornand, Etienne, 2017 Boudry (CH); Born, Jean-Jacques, 1110 Morges (CH)
(74) Mandataire: Thérond, Gérard Raymond

(56) Documents cités:
- FR-A- 2 474 161
- PATENT ABSTRACTS OF JAPAN vol. 6, no. 5 (P-097) 13 Janvier 1982 & JP-A-56 132 513 (KOMIYAMA SHOJI KK.) 16 Octobre 1981

## Description

La présente invention concerne un dispositif servant à indiquer la direction d'un lieu géographique déterminé, notamment de la Mecque.

Il est connu du document CH 613 832 G une montre comportant une aiguille aimantée, montée rotative sur un axe passant par le centre d'un cadran sur lequel est imprimée une carte géographique avec une représentation classique (par exemple projection plane, cylindrique ou conique desquelles sont issues les représentations de Mercator et de Lambert notamment) de continents et de mers intérieures. A la carte géographique susmentionnée est associé un repère, formé par un guichet dans le cadran, permettant de positionner la carte relativement à la direction du nord magnétique terrestre. Sur la glace de la montre est imprimé un segment de droite partant du centre de la montre, c'est-à-dire de l'axe de rotation de l'aiguille aimantée correspondant sur la carte à la position de la Mecque.

Pour indiquer la direction de la Mecque depuis une région donnée et représentée sur la carte de la montre, il est prévu que le cadran support de la carte est rotatif autour de l'axe de rotation passant par la Mecque sur cette carte. Ainsi, on aligne la région dans laquelle se trouve l'utilisateur sur le segment de droite susmentionné, puis on tourne la montre dans son plan général jusqu'à ce que l'aiguille aimantée apparaisse dans le guichet servant de repère. La direction de la Mecque est prétendue correspondre à la direction donnée par le segment de droite prévu sur le verre de la montre.

Cependant, le dispositif décrit ci-avant présente au moins deux problèmes majeurs induisant une erreur non négligeable dans la détermination de la direction d'un lieu géographique prédéterminé, notamment de la Mecque.

Le premier problème provient du fait que la direction du nord magnétique depuis un quelconque point du globe ne correspond pas à la direction du nord géographique auquel est associé le repère susmentionné sur la carte géographique du dispositif décrit ci-avant. Deuxièmement, l'angle formé entre le nord géographique et un lieu déterminé relativement à un lieu quelconque sur une carte géographique à représentation classique ne correspond pas à l'azimut géographique du lieu déterminé relativement au lieu quelconque susmentionné.

En effet, la représentation de l'orthodromie entre deux lieux géographiques donnés correspond généralement sur une carte à représentation classique à une courbe joignant les deux points correspondant aux deux lieux géographiques. On notera de plus que la courbure des courbes joignant divers lieux géographiques à un lieu géographique déterminé est variable. Ainsi, le dispositif décrit dans le document CH 613 832 G ne permet pas d'indiquer précisément la direction de la Mecque depuis une région quelconque de la carte prévue sur le cadran de cette montre.

Le but de la présente invention est de pallier les inconvénients et problèmes susmentionnés en fournissant un dispositif capable d'indiquer précisément la direction d'un lieu géographique déterminé, notamment de la Mecque, depuis une pluralité de lieux ou régions géographiques.

A cet effet, la présente invention a pour objet un dispositif comprenant :
- des premiers moyens d'indication de la direction du nord magnétique terrestre,
- des moyens de positionnement angulaire dudit dispositif dans un plan général de celui-ci relativement à la direction du nord magnétique terrestre,
- des deuxièmes moyens d'indication de la direction d'un premier lieu géographique depuis au moins un deuxième lieu géographique dans lequel ce dispositif est susceptible d'être situé.

Ce dispositif est caractérisé en ce que les deuxièmes moyens d'indication comprennent une carte géographique sur laquelle sont représentées des régions, des pays et/ou des continents, cette carte étant située dans le plan général du dispositif et agencée graphiquement de manière qu'un quelconque point des contours des régions, des pays et/ou des continents présente sensiblement un décalage angulaire, relativement à un centre de référence correspondant au premier lieu géographique et à une direction de référence de la carte géographique, égal à l'azimut géographique de l'orthodromie passant par ledit point quelconque et ledit centre de référence augmenté de 180 degrés. En d'autres termes, la valeur du décalage angulaire est égale à la valeur dudit azimut géographique plus 180 degrés.

Grâce aux caractéristiques du dispositif selon l'invention décrites ci-avant, la direction définie par un point quelconque des régions représentées sur la carte géographique et le centre de référence détermine sensiblement, relativement à la direction du nord géographique sur la carte, l'azimut géographique de l'orthodromie reliant les lieux géographiques correspondant respectivement audit point quelconque et au centre de référence.

Dans ce mode de réalisation, il est possible de corriger l'erreur provenant de la déclinaison magnétique en prévoyant, selon des caractéristiques particulières de l'invention, que les premiers moyens d'indication comprennent un indicateur de la direction du nord magnétique monté rotatif autour d'un axe de rotation et agencé pour s'aligner sélectivement sur une pluralité de repères définissant une pluralité de déclinaisons magnétiques déterminées, la droite passant par un desdits repères correspondant à une déclinaison magnétique nulle et l'axe de rotation dans le plan général du dispositif définissant la direction de référence susmentionnée.

De ce fait, un utilisateur, connaissant la déclinaison magnétique du lieu où il se trouve, peut simplement orienter la carte géographique en alignant l'indicateur de la direction du nord magnétique sur le repère correspondant à cette déclinaison magnétique.

La présente invention a également comme objet un dispositif comprenant :
- des premiers moyens d'indication de la direction du nord magnétique terrestre,
- des moyens de positionnement angulaire de ce dispositif dans un plan général de celui-ci relativement à la direction du nord magnétique terrestre,
- des deuxièmes moyens d'indication de la direction d'un premier lieu géographique depuis au moins un deuxième lieu géographique dans lequel le dispositif est susceptible d'être situé.

Ce dispositif est caractérisé en ce que les moyens d'indication comprennent une carte géographique sur laquelle sont représentées des régions, des pays et/ou des continents, cette carte étant située dans le plan général du dispositif et agencée graphiquement de manière qu'un quelconque point des contours de ces régions, de ces pays et/ou de ces continents présente sensiblement un décalage angulaire, relativement à un centre de référence correspondant au premier lieu géographique et à une direction de référence de la carte géographique, égal à l'azimut magnétique de l'orthodromie passant par ce point quelconque et le point de référence augmenté de 180 degrés.

Dans ce dernier objet de l'invention, la déclinaison magnétique est directement intégrée dans l'agencement graphique des diverses régions, pays et/ou continents représentés sur la carte géographique du dispositif.

Ainsi, en alignant la direction de référence de la carte géographique sur la direction du nord magnétique au lieu où se trouve l'utilisateur du dispositif, la direction du lieu géographique prédéterminé depuis le lieu où se trouve l'utilisateur est donnée par une droite reliant ce lieu au lieu géographique prédéterminé.

Ce deuxième objet de l'invention présente l'avantage de permettre la détermination de la direction d'un lieu géographique prédéterminé depuis un très grand nombre de régions, pays ou lieux géographiques ponctuels de manière très précise sans nécessiter la connaissance de la déclinaison magnétique par l'utilisateur du dispositif selon l'invention. Cependant, on notera que la représentation graphique de la carte selon ce deuxième objet s'éloigne plus fortement des représentations usuelles connues que la représentation graphique correspondante du premier objet selon l'invention décrit ci-avant.

D'autres caractéristiques et avantages de la présente invention seront également décrits ci-après à l'aide de la description suivante, faite en référence aux dessins annexés donnés à titre d'exemples nullement limitatifs dans lesquels :
- la figure 1 représente un premier mode de réalisation de l'invention,
- la figure 2 montre schématiquement divers paramètres intervenant dans la détermination de la direction d'un lieu géographique déterminé,
- la figure 3 montre schématiquement une variante de réalisation du premier mode de réalisation représenté à la figure 1, et
- la figure 4 montre partiellement un deuxième mode de réalisation d'un dispositif selon l'invention.

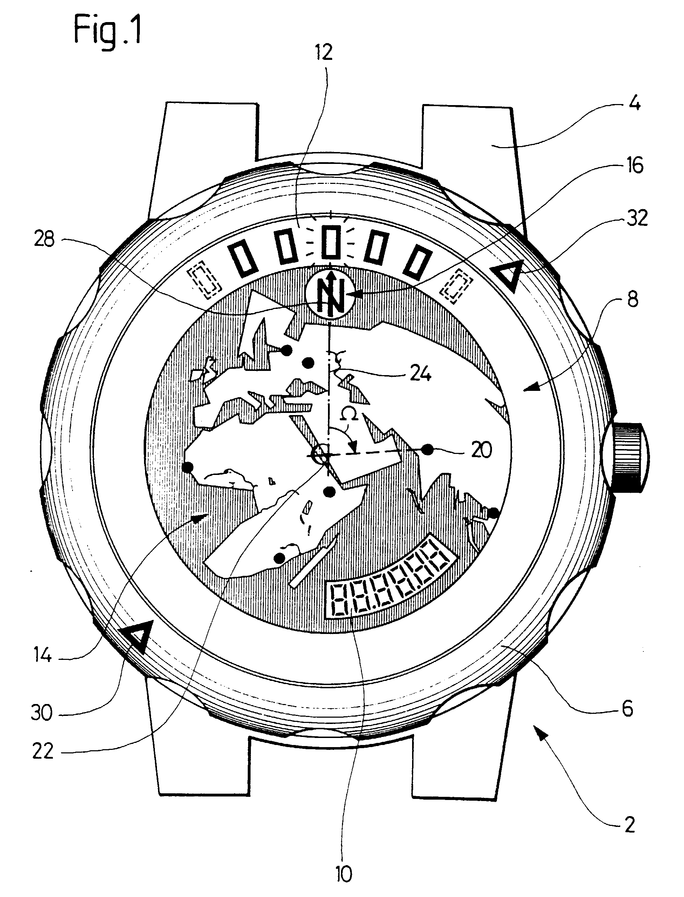

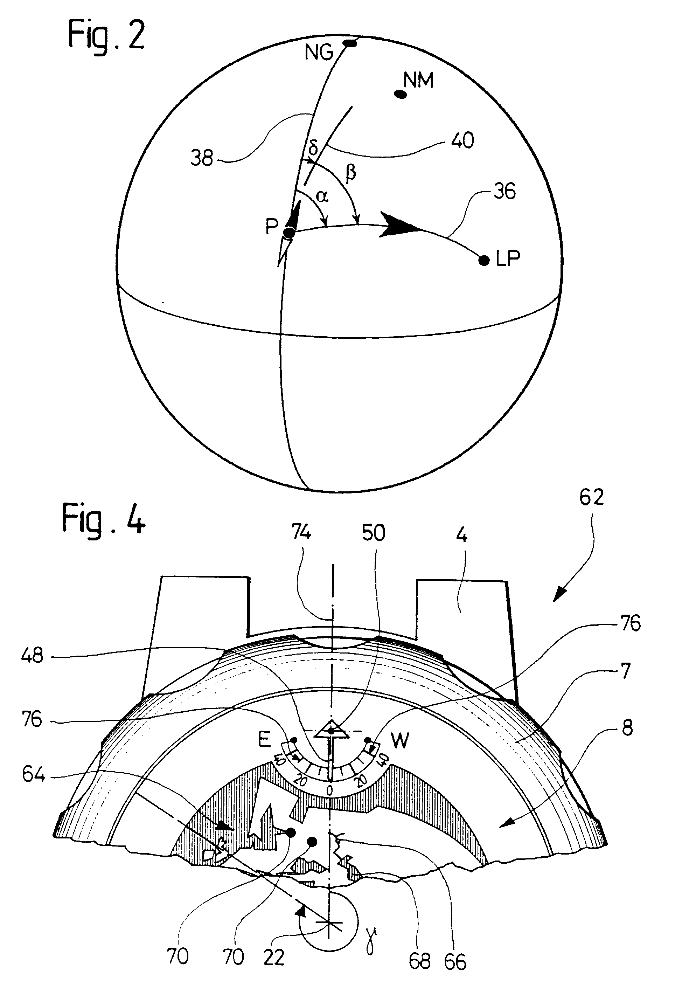

A l'aide des figures 1 et 2, on décrira ci-après un premier mode de réalisation d'un dispositif selon l'invention. De manière nullement limitative, ce dispositif est associé à une montre 2 pouvant être portée au poignet de l'utilisateur. Cette montre comprend un boîtier 4 muni d'une lunette tournante 6. La montre 2 comprend en outre un cadran 8 comprenant un premier affichage 10 servant notamment à l'indication de l'heure et de la date et un affichage électronique périphérique 12 servant à indiquer la direction du nord magnétique. Pour ce faire, la montre 2 comprend à l'intérieur de son boîtier 4 une boussole électronique (non représentée). L'affichage 12 est associé à la boussole électronique susmentionnée pour indiquer à l'utilisateur de la montre la direction du nord magnétique.

Le cadran 8 comprend en outre une carte géographique 14 sur laquelle sont représentés divers pays, continents, mers intérieures, lacs importants et/ou fleuves importants. De plus, sur la carte géographique 14 sont également représentées diverses villes importantes par des points servant à localiser ces villes dans les divers continents ou pays représentés sur la carte 14.

A la carte 14 est associé un repère 16 servant à positionner angulairement la carte 14, laquelle est disposée dans un plan général de la montre 2.

Selon l'invention, l'agencement graphique des diverses régions, pays et/ou autres données géographiques est caractérisé en ce qu'un quelconque point 20 représentant une quelconque de ces données géographiques, notamment un quelconque point des contours de régions, de pays et/ou de continents, présente sensiblement un décalage angulaire Ω, relativement à un centre de référence 22 et à une direction de référence 24 de la carte 14, égal à la valeur de l'azimut magnétique β de l'orthodromie passant par le point quelconque 20 et le centre de référence 22 augmenté de 180°, c'est-à-dire que Ω = β + 180° .

De ce fait, le segment de droite partant du point quelconque 20 et pointant en direction du centre de référence 22 indique la direction du lieu géographique correspondant au centre de référence dès que la direction de référence 24 coïncide avec la direction du nord magnétique terrestre au lieu géographique correspondant au point quelconque 20. Pour ce faire, il suffit d'orienter angulairement la carte 14, et par conséquent la montre 2, de manière que l'affichage 12 indique que la flèche 28 du repère 16, laquelle est parallèle à la direction de référence 24, pointe en direction du nord magnétique terrestre.

Pour faciliter l'indication de la direction de la Mecque, correspondant sur les figures au centre de référence, il est prévu deux repères 30 et 32 placés sur la lunette tournante 6. Les repères 30 et 32 définissent une droite passant par le centre de référence 22. Le repère 30 permet de définir une ligne imaginaire pour l'utilisateur de la montre 2 passant par le lieu géographique dans lequel il se trouve et par le centre de référence 22. Une fois la lunette tournante 6 positionnée correctement, les deux repères 30 et 32 définissent la direction de la Mecque depuis le lieu où se trouve ledit utilisateur. Bien évidemment, d'autres moyens d'indication peuvent être prévus notamment une glace tournante comportant une flèche.

On notera que dans l'agencement graphique de la carte géographique 14, seul le positionnement angulaire est déterminant, le positionnement radial n'ayant pas d'influence pour l'indication de la direction du lieu géographique prédéterminé, de la Mecque dans le cas présent. Ainsi, lors de la réalisation de la carte 14 selon l'invention, le réalisateur dispose d'un degré de liberté pour le tracé des diverses courbes et des divers points prévus. Ce degré de liberté sera utilisé pour donner aux différentes régions, pays, continents, mers et lacs importants un contour évoquant pour l'utilisateur ces diverses données géographiques. On remarquera toutefois que ce degré de liberté ne permet pas de redonner une forme entièrement classique et usuelle aux divers pays et continents comme cela apparaît sur la figure 1, notamment pour l'Afrique.

Dans ce premier mode de réalisation de l'invention, la carte 14 intègre dans son agencement graphique la déclinaison magnétique δ en tout point (P sur la figure 2) de la carte géographique 14 représentée à la figure 1.

Sur la figure 2 est représentée schématiquement la sphère terrestre avec les positions respectives du nord magnétique NM et du nord géographique NG. Ensuite, on a représenté un point quelconque P du globe terrestre et la position d'un lieu géographique déterminé LP. L'orthodromie entre le point P et le point correspondant au lieu géographique déterminé LP forme une courbe 36. L'orthodromie entre le point P et le nord géographique correspond à un segment de méridien 38. On a également représenté la direction du flux magnétique terrestre au point P par la courbe 40. Les courbes 36, 38 et 40 sont comprises dans la surface définissant la sphère terrestre.

On rappellera ici qu'une orthodromie entre deux points de la sphère terrestre est définie par l'intersection de cette sphère terrestre avec un plan contenant ces deux points et le centre de la sphère terrestre. L'orthodromie entre deux points correspondant à deux lieux géographiques détermine la distance la plus courte entre ces deux lieux géographiques.

L'angle formé entre les courbes 38 et 40 définit la déclinaison magnétique δ au point P.

L'angle formé entre les courbes 36 et 40 définit l'azimut magnétique β alors que l'angle formé entre les courbes 36 et 38 définit l'azimut géographique α du point LP relativement au point P. On remarquera α = β + δ , δ étant variable en fonction de la position du point P.

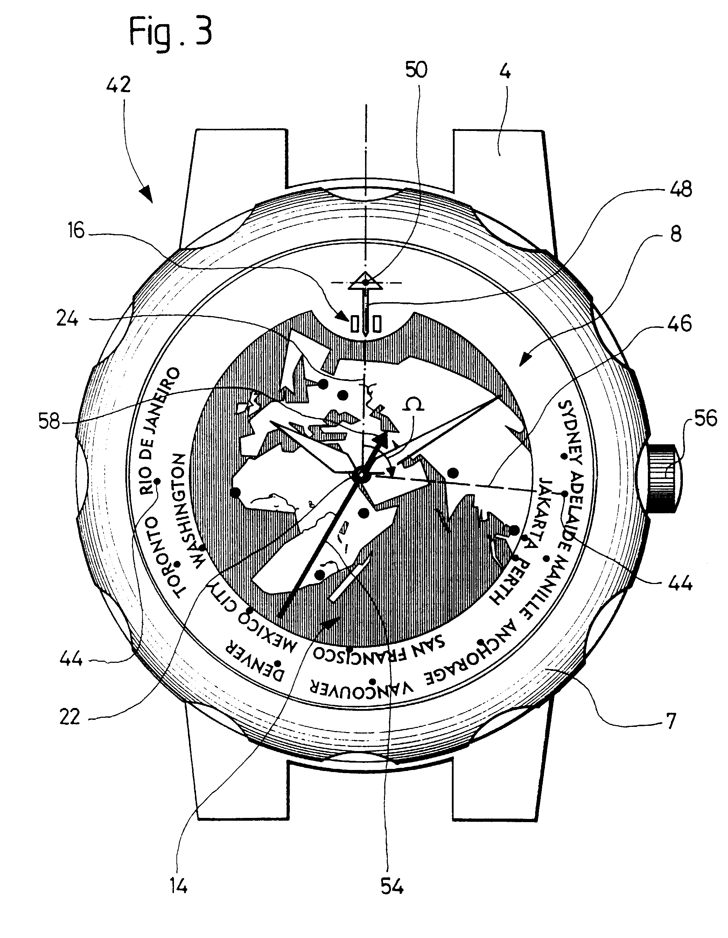

Sur la figure 3 est représentée une variante du premier mode de réalisation décrit ci-avant. Selon cette variante, la montre 42 comprend également un boîtier 4, une lunette 7 et un cadran 8 comprenant une carte géographique 14 équivalente à celle décrite précédemment. On remarquera que cette carte représente schématiquement essentiellement l'Afrique, l'Europe et une partie de l'Asie. Sur le cadran 8 est également représenté une pluralité de repères 44 correspondant à diverses villes importantes non représentées sur la carte 14. Cependant, il serait également possible de représenter des villes importantes contenues dans la carte 14 par un repère 44 sur la périphérie du cadran 8.

L'angle Ω défini par la direction de référence 24 et le segment de droite 46 reliant le centre de référence 22 à un quelconque repère 44 correspond à l'azimut magnétique β du lieu géographique correspondant à ce quelconque repère relativement au lieu géographique correspondant au centre de référence 22 augmenté de 180 degrés.

Afin d'aligner la direction de référence 24 sur la direction du nord magnétique, il est prévu une boussole analogique comprenant un indicateur 48 monté rotatif sur un axe 50 perpendiculaire au cadran 8. Pour déterminer la direction de la Mecque depuis un lieu géographique ou une région géographique quelconque, il est nécessaire de positionner l'indicateur 48 de telle manière qu'il s'aligne sur un repère 16. On remarquera que la direction définie par le repère 16 et l'axe de rotation 50 dans le plan du cadran 8 est parallèle à la direction de référence 24.

Pour indiquer la direction de la Mecque, une aiguille 54, actionnable à l'aide de la couronne 56, est prévue. La direction de la Mecque est donnée par la flèche 58 lorsque l'aiguille 54 est alignée sur le lieu ou la région géographique où se trouve l'utilisateur de la montre 42.

A l'aide de la figure 4, on décrira ci-après un deuxième mode de réalisation de l'invention.

Sur la figure 4 est représentée partiellement une montre 62 comportant une carrure 4, une lunette 7 et un cadran 8. Sur ledit cadran 8 est représentée une carte géographique 64 sur laquelle sont représentées diverses régions géographiques, notamment divers pays, continents, fleuves 66, lacs importants et mers intérieures 68. De plus, sur cette carte sont également représentées diverses villes importantes, lesquelles sont indiquées par des repères ponctuels 70 de manière similaire au premier mode de réalisation décrit ci-avant.

Dans ce deuxième mode de réalisation de l'invention, chaque repère ponctuel, chaque tracé définissant un fleuve ou chaque contour définissant une région géographique quelconque sont agencés graphiquement sur la carte 64 de manière qu'un quelconque point correspondant à ces repères ponctuels, ces tracés et/ou ces contours présentent sensiblement un décalage angulaire γ, relativement à un centre de référence 22 correspondant à un premier lieu géographique, ici la Mecque, et à une direction de référence 74 de la carte géographique 64, égal à l'azimut géographique α (figure 2) de l'orthodromie passant par ledit point quelconque (P sur la figure 2) et le centre de référence 22 augmenté de 180 degrés. En termes mathématiques, γ = α + 180°.

La montre 62, servant notamment à indiquer la direction du lieu géographique correspondant au centre de référence 22 depuis une région géographique quelconque représentée sur la carte 64, comporte également un indicateur 48 de la direction du nord magnétique terrestre monté rotatif sur un axe 50 perpendiculaire au plan général de la montre 62 dans lequel est situé la carte 64. Cet indicateur 48 est associé à un aimant bipolaire (non représenté) situé sous le cadran 8. L'indicateur 48 est solidaire de l'aimant permanent bipolaire dont l'axe magnétique, d'orientation radiale relativement à l'axe 50, s'aligne dans le flux du champ magnétique terrestre traversant la région dans laquelle cet aimant permanent est situé.

Une pluralité de repères 76, agencés de manière concentrique autour de l'axe 50, sont prévus sur le cadran 8. Cette pluralité de repères 76 définissent une pluralité de déclinaisons magnétiques déterminées, la droite passant par le repère zéro et l'axe 50 dans le plan du cadran 8 définissent la direction de référence 74. Les déclinaisons magnétiques est (E) correspondent aux repères agencés à gauche du repère zéro alors que les déclinaisons magnétiques ouest (W) sont agencées à droite du repère zéro. On notera que, lorsque la déclinaison magnétique δ (figure 2) a une valeur nulle, l'indicateur 48 indique la direction du nord géographique.

Pour indiquer la direction du lieu géographique correspondant au centre de référence 22, il est également prévu des moyens servant à définir visuellement pour l'utilisateur de la montre 62 une droite entre un point quelconque de la carte géographique 64 et le centre de référence 22. Ces moyens ne sont pas représentés sur la figure 4 étant donné qu'ils sont par exemple similaires à ceux décrits dans le premier mode de réalisation de l'invention.

Pour indiquer de manière précise la direction du lieu géographique correspondant au centre de référence 22, l'utilisateur doit connaître la déclinaison magnétique du lieu où il se trouve pour pouvoir aligner l'indicateur 48 sur le repère correspondant à cette déclinaison magnétique. Ainsi, la direction de référence 74 correspond alors à la direction du nord géographique. De ce fait, la droite passant par un point quelconque de la carte et le centre de référence 22 indique la direction du lieu correspondant à ce centre de référence 22 lorsque l'utilisateur se trouve dans le lieu géographique correspondant à ce point quelconque de la carte 64.

Finalement, on remarquera que le deuxième mode de réalisation de l'invention permet de tenir compte de l'évolution dans le temps de la déclinaison magnétique δ et également de la valeur locale de cette déclinaison magnétique δ.

## Revendications

1. Dispositif comprenant :
- des premiers moyens (48) d'indication de la direction du nord magnétique terrestre,
- des moyens de positionnement angulaire (76) dudit dispositif dans un plan général de celui-ci relativement à la direction du nord magnétique terrestre,
- des deuxièmes moyens d'indication (64, 30, 32; 54, 58) de la direction d'un premier lieu géographique depuis au moins un deuxième lieu géographique dans lequel ledit dispositif est susceptible d'être situé,
ce dispositif étant caractérisé en ce que lesdits deuxièmes moyens d'indication comprennent une carte géographique (64) sur laquelle sont représentées des régions, des pays et/ou des continents, cette carte étant située dans ledit plan général dudit dispositif et agencée graphiquement de manière qu'un quelconque point des contours desdites régions, desdits pays et/ou desdits continents présente sensiblement un décalage angulaire (γ), relativement à un centre de référence (22) correspondant audit premier lieu géographique et à une direction de référence (74) de ladite carte géographique, égal à l'azimut géographique (α) de l'orthodromie passant par ledit quelconque point et ledit centre de référence augmenté de 180 degrés.

2. Dispositif selon la revendication 1, caractérisé en ce que lesdits premiers moyens d'indication comprennent un indicateur (48) de la direction du nord magnétique monté rotatif autour d'un axe de rotation (50) et agencé pour s'aligner sélectivement sur une pluralité de repères (76) définissant une pluralité de déclinaisons magnétiques (δ) déterminées, la droite passant par un desdits repères correspondant à une déclinaison magnétique nulle (0) et ledit axe de rotation (50) dans ledit plan général dudit dispositif définissant ladite direction de référence (74).

3. Dispositif selon l'une des revendications 1 et 2, caractérisé en ce que ladite carte géographique (64) comporte également l'indication de fleuves (66), de lacs et/ou de mers intérieures (68) agencés graphiquement de manière que tout point définissant ces fleuves, ces lacs et/ou mers intérieures présente sensiblement un décalage angulaire (γ), relativement audit centre de référence (22) et à ladite direction de référence (74), égal à l'azimut géographique (α) de l'orthodromie passant par ce point et ledit point de référence augmenté de 180 degrés.

4. Dispositif selon l'une des revendications 1 à 3, caractérisé en ce que ladite carte géographique (64) comporte également l'indication de villes représentées respectivement par des repères ponctuels (70), chacun de ces repères ponctuels présentant sensiblement un décalage angulaire, relativement audit centre de référence (22) et à ladite direction de référence (74), égal à l'azimut géographique (α)de l'orthodromie passant par ce repère et ledit point de référence augmenté de 180 degrés.

5. Dispositif comprenant :
- des premiers moyens (12; 48) d'indication de la direction du nord magnétique terrestre,
- des moyens (16, 28) de positionnement angulaire dudit dispositif dans un plan général de celui-ci relativement à la direction du nord magnétique terrestre,
- des deuxièmes moyens (14, 30, 32; 54, 58) d'indication de la direction d'un premier lieu géographique depuis au moins un deuxième lieu géographique dans lequel ledit dispositif est susceptible d'être situé, ce dispositif étant caractérisé en ce que lesdits deuxièmes moyens d'indication comprennent une carte géographique (14) sur laquelle sont représentées des régions, des pays et/ou des continents, cette carte étant située dans ledit plan général dudit dispositif et agencée graphiquement de manière qu'un quelconque point des contours desdites régions, desdits pays et/ou desdits continents présente sensiblement un décalage angulaire (Ω), relativement à un centre de référence (22) correspondant audit premier lieu géographique et une direction de référence (24) de ladite carte géographique, égal à l'azimut magnétique (β) de l'orthodromie passant par ledit quelconque point et ledit point de référence augmenté de 180 degrés.

6. Dispositif selon la revendication 5, caractérisé en ce que lesdits premiers moyens d'indication comprennent un indicateur (48) de la direction du nord magnétique terrestre monté rotatif autour d'un axe de rotation (50) et agencé pour s'aligner sur un repère (16), la droite passant par ledit repère et ledit axe de rotation dans ledit plan général dudit dispositif définissant ladite direction de référence (24).

7. Dispositif selon l'une des revendications 1 et 2, caractérisé en ce que ladite carte géographique (14) comporte également l'indication de fleuves, de lacs et/ou mers intérieures agencés graphiquement de manière que tout point définissant ces fleuves, ces lacs et/ou ces mers intérieures présente sensiblement un décalage angulaire (Ω), relativement audit centre de référence (22) et à ladite direction de référence (24), égal à l'azimut magnétique de l'orthodromie passant par ce point et ledit point de référence augmenté de 180 degrés.

8. Dispositif selon l'une des revendications 5 à 7, caractérisé en ce que ladite carte géographique (14) comporte également l'indication de villes représentées respectivement par des repères ponctuels (44), chacun de ces repères ponctuels présentant sensiblement un décalage angulaire (Ω), relativement audit centre de référence (22) et à ladite direction de référence (24), égal à l'azimut magnétique (β) de l'orthodromie passant par ce repère et ledit point de référence augmenté de 180 degrés.

9. Dispositif selon l'une des revendications précédentes, caractérisé en ce que lesdits deuxièmes moyens d'indication comprennent des moyens (30, 32) pour définir une droite entre un point quelconque de ladite carte géographique (14; 64) et ledit centre de référence (22) de manière à indiquer la direction dudit premier lieu géographique lorsque ledit dispositif est situé sensiblement à l'endroit correspondant à ce point quelconque.

10. Dispositif selon l'une des revendications précédentes, caractérisé en ce que ledit premier lieu géographique est la Mecque.

## Patentansprüche

1. Vorrichtung, mit:
- ersten Mitteln (48) zur Angabe der terrestrischen magnetischen Nordrichtung,
- Mitteln (76) zur Winkelpositionierung der Vorrichtung in einer allgemeinen Ebene dieser Vorrichtung relativ zur terrestrischen magnetischen Nordrichtung,
- zweiten Mitteln (64, 30, 32; 54, 58) zur Angabe der Richtung eines ersten geographischen Ortes ausgehend wenigstens von einem zweiten geographischen Ort, in dem sich die Vorrichtung befinden kann,
wobei diese Vorrichtung dadurch gekennzeichnet ist, daß die zweiten Angabemitteln eine geographische Karte (64) umfassen, auf der Regionen, Länder und/oder Kontinente dargestellt sind, wobei diese Karte sich in der allgemeinen Ebene der Vorrichtung befindet und graphisch so beschaffen ist, daß irgendein Punkt der Umrisse der Regionen, der Länder und/oder der Kontinente im wesentlichen eine Winkelverschiebung (γ) relativ zu einem dem ersten geographischen Ort entsprechenden Referenzzentrum (22) und zu einer Referenzrichtung (74) der geographischen Karte aufweist, die gleich dem geographischen Azimut (α) der durch den beliebigen Punkt und das um 180 Grad vergrößerte Referenzzentrum verlaufenden Orthodrome ist.

2. Vorrichtung nach Anspruch 1, dadurch gekennzeichnet, daß die ersten Angabemittel einen Anzeiger (48) der magnetischen Nordrichtung enthalten, der drehbar um eine Drehachse (50) angebracht und so beschaffen ist, daß er sich wahlweise auf mehrere Markierungen (76) ausrichtet, die mehrere bestimmte magnetische Deklinationen (δ) definieren, wobei die durch eine der Markierungen verlaufende Gerade einer magnetischen Deklination null (0) entspricht und wobei die Drehachse (50) in der allgemeinen Ebene der Vorrichtung die Referenzrichtung (74) definiert.

3. Vorrichtung nach einem der Ansprüche 1 und 2, dadurch gekennzeichnet, daß die geographische Karte (64) außerdem die Angabe von Flüssen (66), Seen und/oder Binnenmeeren (68) enthält, die graphisch in der Weise angeordnet sind, daß jeder Punkt, der diese Flüsse, diese Seen und/oder diese Binnenmeere definiert, im wesentlichen eine Winkelverschiebung (γ) relativ zum Referenzzentrum (22) und zur Referenzrichtung (74) aufweist, die gleich dem geographischen Azimut (α) der durch diesen Punkt und den um 180 Grad vergrößerte Referenzpunkt verlaufenden Orthodrome ist.

4. Vorrichtung nach einem der Ansprüche 1 bis 3, dadurch gekennzeichnet, daß die geographische Karte (64) außerdem die Angabe von Städten enthält, die jeweils durch punktförmige Markierungen (70) dargestellt sind, wobei jede dieser punktförmigen Markierungen im wesentlichen eine Winkelverschiebung relativ zum Referenzzentrum (22) und zur Referenzrichtung (74) aufweist, die gleich dem geographischen Azimut (α) der durch diese Markierung und den um 180 Grad vergrößerten Referenzpunkt verlaufenden Orthodrome ist.

5. Vorrichtung, mit:
- ersten Mitteln (12; 48) zur Angabe der terrestrischen magnetischen Nordrichtung,
- Mitteln (16, 28) zur Winkelpositionierung der Vorrichtung in einer allgemeinen Ebene dieser Vorrichtung relativ zur terrestrischen magnetischen Nordrichtung,
- zweiten Mitteln (14, 30, 32; 54, 58) zur Angabe der Richtung eines ersten geographischen Ortes ausgehend von wenigstens einem zweiten geographischen Ort, an dem sich die Vorrichtung befinden kann,
wobei diese Vorrichtung dadurch gekennzeichnet ist, daß die zweiten Angabemittel eine geographische Karte (14) enthalten, auf der Regionen, Länder und/oder Kontinente dargestellt sind, wobei diese Karte sich in der allgemeinen Ebene der Vorrichtung befindet und graphisch so beschaffen ist, daß irgendein Punkt der Konturen der Bereiche, der Länder und/oder der Kontinente im wesentlichen eine Winkelverschiebung (Ω) relativ zu einem dem ersten geographischen Ort entsprechenden Referenzzentrum (22) und zu einer Referenzrichtung (24) der geographischen Karte aufweist, die gleich dem magnetischen Azimut (β) der durch den beliebigen Punkt und den um 180 Grad vergrößerten Referenzpunkt verlaufenden Orthodrome ist.

6. Vorrichtung nach Anspruch 5, dadurch gekennzeichnet, daß die ersten Angabemittel einen Anzeiger (48) der terrestrischen magnetischen Nordrichtung enthalten, der drehbar um eine Drehachse (50) angebracht und so beschaffen ist, daß er sich auf eine Markierung (16) ausrichtet, wobei die durch die Markierung und die Drehachse in der allgemeinen Ebene der Vorrichtung verlaufenden Gerade die Referenzrichtung (24) definiert.

7. Vorrichtung nach einem der Ansprüche 1 und 2, dadurch gekennzeichnet, daß die geographische Karte (14) außerdem die Angabe von Flüssen, Seen und/oder Binnenmeeren enthält, die so beschaffen sind, daß jeder Punkt, der diese Flüsse, diese Seen und/oder diese Binnenmeere definiert, im wesentlichen eine Winkelverschiebung (Ω) relativ zum Referenzzentrum (22) und zu der Referenzrichtung (24) aufweist, die gleich dem magnetischen Azimut der durch diesen Punkt und diesen um 180 Grad vergrößerten Referenzpunkt verlaufenden Orthodrome ist.

8. Vorrichtung nach einem der Ansprüche 5 bis 7, dadurch gekennzeichnet, daß die geographische Karte (14) außerdem die Angabe von Städten enthält, die jeweils durch punktförmige Markierungen (44) dargestellt sind, wobei jede dieser punktförmigen Markierungen im wesentlichen eine Winkelverschiebung (Ω) relativ zum Referenzzentrum (22) und zur Referenzrichtung (24) aufweist, die gleich dem magnetischen Azimut (β) der durch diese Markierung und den um 180 Grad vergrößerten Referenzpunkt verlaufenden Orthodrome ist.

9. Vorrichtung nach einem der vorangehenden Ansprüche, dadurch gekennzeichnet, daß die zweiten Angabemittel Mittel (30, 32) enthalten, die eine Gerade zwischen einem beliebigen Punkt der geographischen Karte (14; 64) und dem Referenzzentrum (22) in der Weise definieren, daß die Richtung des ersten geographischen Ortes angegeben wird, wenn sich die Vorrichtung im wesentlichen an der diesem beliebigen Punkt entsprechenden Stelle befindet.

10. Vorrichtung nach einem der vorangehenden Ansprüche, dadurch gekennzeichnet, daß der erste geographische Ort Mekka ist.

## Claims

1. Arrangement comprising :
- first means (48) for indicating the direction of the terrestrial magnetic north,
- means (76) for the angular positioning of said arrangement in a general plane thereof relative to the direction of the terrestrial magnetic north,
- second means (64, 30, 32; 54, 58) for indicating the direction of a first geographic location from at least one second geographic location at which said arrangement may be placed,
such arrangement being characterized in that said second indicating means comprise a map (64) on which are shown regions, countries and/or continents, such map being placed in said general plane of said arrangement and graphically arranged in a manner such that any point whatsoever of the contours of said regions, said countries and/or said continents substantially exhibits an angular shift (γ) relative to a center of reference (22) corresponding to said first geographic location and to a reference direction (74) of said map, equal to the geographic azimuth (α) of the great circle passing through such point and said center of reference augmented by 180 degrees.

2. Arrangement according to claim 1, characterized in that said first indicating means comprise an indicator (48) of the magnetic north direction rotatably mounted on a rotation axis (50) and arranged to be selectively aligned with a plurality of reference marks (76) defining a plurality of given magnetic declinations (δ), the straight line passing through one of said reference marks corresponding to a null (0) magnetic declination and said rotation axis (50) in said general plane of said arrangement defining said reference direction (74).

3. Arrangement according to either of claims 1 and 2, characterized in that said map (64) also includes the indication of rivers (66), of lakes and/or of interior seas (68) graphically arranged so that every point defining such rivers, such lakes and/or interior seas substantially exhibits an angular shift (γ), relative to said center of reference (22) and to said reference direction (74) equal to the geographic azimuth (α) of the great circle passing through such point and said reference point augmented by 180 degrees.

4. Arrangement according to any of claims 1 to 3, characterized in that said map (64) also includes the indication of cities respectively shown by point marks (70), each of such point marks substantially exhibiting an angular shift relative to said center of reference (22) and to said reference direction (74) equal to the geographic azimuth (α) of the great circle passing through such point mark and said reference point augmented by 180 degrees.

5. Arrangement comprising :
- first means (12; 48) for indicating the direction of the terrestrial magnetic north,
- means (16, 28) for the angular positioning of said arrangement in a general plane thereof relative to the direction of the terrestrial magnetic north,
- second means (14, 30, 32; 54 58) for indicating the direction of a first geographic location from at least one second geographic location at which said arrangement may be placed,
such arrangement being characterized in that said second indicating means comprise a map (14) on which are shown regions, countries and/or continents, such map being placed in said general plane of said arrangement and graphically arranged so that any point whatsoever of the contours of said regions, said countries and/or said continents substantially exhibits an angular shift (Ω) relative to a center of reference (22) corresponding to said first geographic location and a reference direction (24) of said map equal to the magnetic azimuth (β) of the great circle passing through such point and said reference point augmented by 180 degrees.

6. Arrangement according to claim 5, characterized in that said first indicating means comprise an indicator (48) of the terrestrial magnetic north direction rotatably mounted around a rotation axis (50) and arranged to be aligned with a mark (16), the straight line passing through said mark and said rotation axis in the general plane of said arrangement defining said reference direction (24).

7. Arrangement according to either of claims 1 and 2, characterized in that said map (14) also includes the indication of rivers, of lakes and/or of interior seas graphically arranged so that every point defining such rivers, such lakes and/or such interior seas substantially exhibits an angular shift (Ω) relative to said center of reference (22) and to said reference direction (24) equal to the magnetic azimuth of the great circle passing through such point and said reference point augmented by 180 degrees.

8. Arrangement according to any of claims 5 to 7, characterized in that said map (14) also includes the indication of cities shown respectively by point marks (44), each of such point marks substantially exhibiting an angular shift (Ω) relative to said center of reference (22) and to said reference direction (24) equal to the magnetic azimuth (β) of the great circle passing through such point mark and said reference point augmented by 180 degrees.

9. Arrangement according to any of the preceding claims, characterized in that said second indicating means comprise means (30, 32) for defining a straight line between any point whatsoever of said map (14; 64) and said center of reference (22) so as to indicate the direction of said first geographic location whenever said arrangement is substantially placed at the place corresponding to such point.

10. Arrangement according to any of the preceding claims, characterized in that said first geographic location is Mecca.
